Europäisches Patentamt

European Patent Office

Office européen des brevets

(11) Veröffentlichungsnummer: **0 176 756**
**A1**

(12) # EUROPÄISCHE PATENTANMELDUNG

(21) Anmeldenummer: 85110719.3

(22) Anmeldetag: 26.08.85

(51) Int. Cl.⁴: **B 65 G 67/02**

(30) Priorität: 03.09.84 DE 3432312

(43) Veröffentlichungstag der Anmeldung:
09.04.86 Patentblatt 86/15

(84) Benannte Vertragsstaaten:
CH FR GB IT LI SE

(71) Anmelder: Miebach, Ernst, Dr.
Schultessdamm 36
D-2000 Hamburg 65(DE)

(71) Anmelder: Dr. Miebach & Partner GmbH
Untermainanlage 6
D-6000 Frankfurt/M. 1(DE)

(72) Erfinder: Miebach, Ernst, Dr. jur. Dipl.-Kaufmann
Schultessdamm 36
D-2000 Hamburg(DE)

(72) Erfinder: Miebach, Joachim, Dr.-Ing.
Dipl.-Wirtschaftsing.
Hainerbergweg 38
D-6240 Königstein(DE)

(72) Erfinder: Röver, Klaus, Dipl.-Ing.
Anemonenweg 8
D-6382 Friedrichsdorf(DE)

(54) **Verladestation für die stirnseitige und längsseitige automatische Be- und Entladung von genormten Transportbehältnissen mit gleichzeitig mehreren Transporteinheiten.**

(57) Die fahrerlose Lademaschine (1) der Verladestation ist mit drei mechanischen Führungseinrichtungen ausgestattet: mit Bodenführungen (3,4,5,6,) auf der Rampe und auf der Überladebrücke (2) sowie mit seitlichen Steuerelementen (10) im Transportbehältnis. Eine Verkeilung der Transporteinheiten durch unebene Bordwände - Rungen etc. - soll verhindert werden durch einen an der Lademaschine angebrachten Schutz- und Führungskäfig (11), dessen Seitenwände die Transporteinheiten umfassen so daß er mit den Transporteinheiten einen festen Verbund bildet. Die Seitenwände des Schutz- und Führungskäfigs (11), der senkrecht zur Fahrtrichtung gelagert ist, sind vorne und hinten angewinkelt (11.1), so daß bei deren Anfahren gegen eine Unebenheit der Bordwände der Verbund seitlich verschoben wird. Die Hubgabeln der Lademaschine sind in Fahrtrichtung mit Tragrollen (12) ausgestattet, auf denen die vom Schutz- und Führungskäfig (11) umfaßten Transporteinheiten stehen, so daß die Tragrollen (12) die Verschiebung des "Verbundes" auf den Hugabeln – den von außen wirkenden Kräften folgend – ermöglichen. Nachfolgend kann die Lademaschine (1) mit dem Verbund Schutz- und Führungskäfig/Transporteinheiten zwischen den Unebenheiten hindurchgleiten.

./...

FIGUR 1

Hamburg, den 23.08.1985

1

VERLADESTATION FÜR DIE STIRNSEITIGE UND LÄNGSSEITIGE
AUTOMATISCHE BE-UND ENTLADUNG VON GENORMTEN TRANSPORT-
BEHÄLTNISSEN MIT GLEICHZEITIG MEHREREN TRANSPORTEINHEITEN

---

**Beschreibung:**

Die Erfindung betrifft eine Verladestation für das stirnseitige und längsseitige automatische Be- und Entladen
eines vor der Laderampe angedockten Transportbehältnisses
- wie Lastkraftwagen, Container, Wechselaufbau oder Bahnwaggon - mit gleichzeitig mehreren Transporteinheiten -
wie Paletten, Boxen oder Schrumpfpakete unter Verwendung
einer zwangsgesteuerten, vorzugsweise nach dem Hubgabelprinzip arbeitenden fahrerlosen Lademaschine.

Verladestationen für das automatische Be- und Entladen
mit gleichzeitig mehreren Transporteinheiten sind bekannt: Aus "Transport und Lager" 7/8/1980, Seiten 46-50
sowie aus den DE-OS 31 32 899 und 32 18 756. Das zuerst
genannte System erfüllt nicht die Aufgabe der Erfindung.
Die anschließend angeführten Anmeldungen sind vorzugsweise vorgesehen für die automatische Be- und Entladung
von Transportbehältnissen mit glatten Bordwänden und können die nachstehend dargestellten Anforderungen nur bedingt erfüllen.

Der Erfindung liegt die Aufgabe zugrunde, die Forderung
nach einer Standard-Verladestation zu erfüllen und zwar
für große, mittlere und kleinere Unternehmen, mit allen
gängigen Zufördermöglichkeiten für Transporteinheiten,
insbesondere für das Be- und Entladen aller genormten
Transportbehältnisse mit unebenen Bordwänden, z.B. mit
Aussparungen, Rungen o.ä.

Lösung dieser Aufgaben ist erfindungsgemäß nach dem kennzeichnenden Teil des Anspruchs 1 eine Verladestation, die
- bezogen auf die 3 vorgenannten Patentanmeldungen - mit
folgenden weiteren Ausbildungen ausgestattet ist:

1. <u>Mechanische Steuerungsvorrichtungen:</u>

Führung der Lademaschine auf der Rampe und auf der
Überladebrücke mit Parallelführung und ein- und ausschiebbarer Verlängerung:

- für die hintere Führung mit einer in der Mittelachse der Lademaschine vorzugsweise vertikal montierten Leitrolle, die durch mit kleinen Einfahrtrichtern versehene Führungsprofile seitlich
  zwangsgesteuert wird,

- für die vordere Führung mit 2 unter den Hubgabeln
  angebrachten mit Führungsnuten versehene Tandemrollen, die durch Führungsschienen gesteuert werden.

Führung im Transportbehältnis:

Sie erfolgt - wie in P 31 32 899.7-22 - mit seitlich
an dem Antriebsteil der Lademaschine montierten Leitrollen, die jedoch zur jeweiligen Anpassung an Unebenheiten der Bordwände federnd ausgebildet sein
können.

2. Vorrichtungen zur Verhinderung von Verkeilungen der Transporteinheiten im Transportbehältnis:

- Ein an der Lademaschine angebrachter Schutz- und Führungskäfig, der mit seinen Seitenblechen den Pulk der Transporteinheiten umfaßt, diese weiter gegeneinanderstaut und standgesichert - Unebenheiten im Transportbehältnis durchgleitend - darin absetzt. Der Schutz- und Führungskäfig ist senkrecht zur Fahrtrichtung beweglich gelagert; seine Seitenbleche sind vorne und hinten angewinkelt, so daß beim Anfahren gegen eine Unebenheit durch diese, der von Schutz- und Führungskäfig und Transporteinheiten gebildete feste "Verbund" mechanisch seitlich verschoben werden kann.

- Tragrollen, die in Fahrtrichtung auf den Hubgabeln der Lademaschine angebracht sind. Die Transporteinheiten stehen - umfaßt durch den Schutz- und Führungskäfig - auf den Tragrollen, so daß diese die durch die angewinkelten Seitenbleche des Schutz- und Führungskäfig eingeleitete - jeweils nur geringfügige - Verschiebung des "Verbundes" ermöglichen.

3. Vorrichtungen auf der Überladebrücke mit Parallelführung und ein- und ausschiebbarer Verlängerung:

Auf dem Steigungsteil und dem Parallelführungsteil der Überladebrücke sind seitlich bewegliche Überfahrbleche montiert. Das Überfahrblech auf dem Parallelführungsteil ist hydraulisch senkrecht zur Fahrtrichtung verschiebbar. Das Überfahrblech auf dem Steigungsteil - um einen Drehpunkt an der Schnittstelle Rampe/Überfahrblech beweglich angeordnet - ist mit dem Überfahrblech auf dem Parallelführungsteil so
verbunden, daß bei dessen mittiger Positionierung vor
dem Transportbehältnis beide Überfahrbleche gleichzeitig seitlich verschoben werden. Führungsleisten
und Profilschienen für die Steuerung der Lademaschine
bilden an den 2 Schnittstellen Rampe/Steigungs-/ und
Parallelführungsbleche leichte Winkel, so daß insgesamt eine gesicherte Steuerung der Lademaschine und
deren horizontale und mit dem Transportbehältnis
höhengleiche, einfahrgerechte Bereitstellung gewährleistet ist.

Weitere Ausgestaltungen der Erfindung sind den Unteransprüchen zu entnehmen.

Die Erfindung wird nachstehend in Zeichnungen dargestellt und erläutert.

Figur 1:

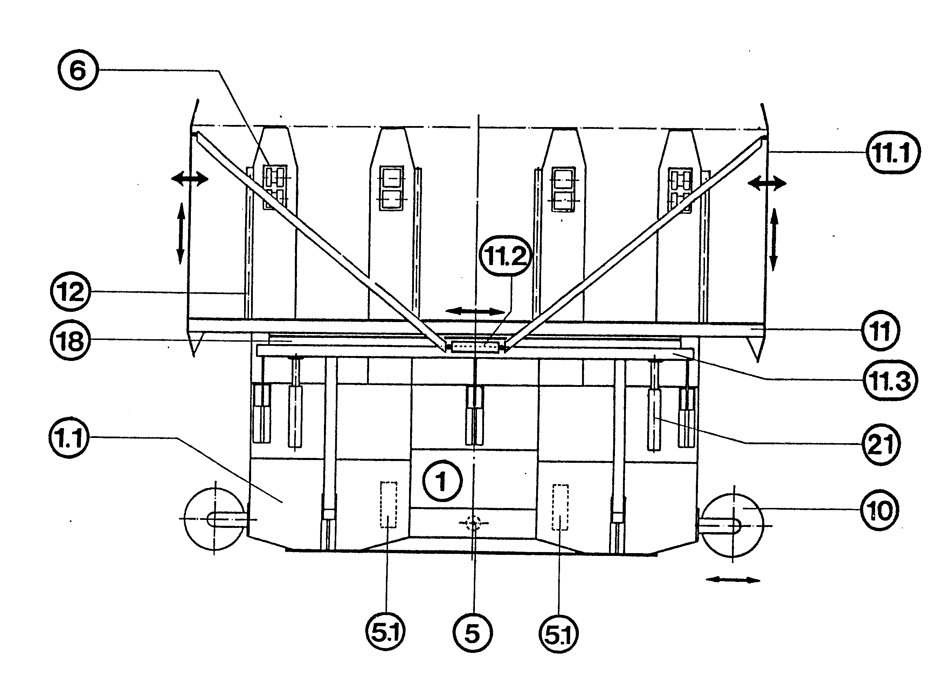

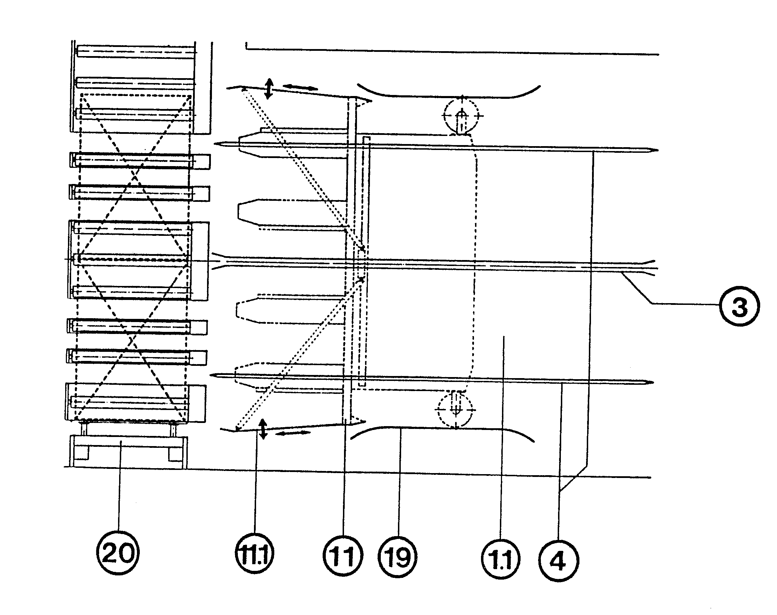

zeigt die Lademaschine 1, deren Antriebsteil 1.1 mit der
Führungsrolle 5, den Antriebsrädern 5.1, den Doppelleitrollen 10 zur Führung der Lademaschine im Transportbehältnis. An den - zur seitlichen Bewegung der Transporteinheiten - mit Tragrollen 12 ausgestatteten Hubgabeln sind
2 mit "Tandemrollen mit Führungsnut" 6 zur Führung auf
den Führungsschienen 4 ausgebildet. Ferner zeigt Figur 1
den Schutz- und Führungskäfig 11 mit vorne und hinten
angewinkelten Seitenblechen 11.1, die durch eine hydraulische Spreizvorrichtung 11.2 vorne zum Umfassen der
Transporteinheiten geöffnet werden können. Der Schutz-
und Führungskäfig 11 ist über einen Zug-/Schubrahmen 11.3
in Fahrtrichtung, durch eine Zug-/Schubhydraulik 21 vor-
und zurückverfahrbar und über eine Querschiene 18 seitlich beweglich gelagert.

Figur 2:

zeigt 2 auf einer Rollenbahn gegen einen Palettenanschlag
20 gestauten Transporteinheiten vor der Lademaschine 1 in
ihrer Abrufzone und neben dem Antriebsteil 1.1 Justierbleche 19 für die mittige Fixierung des Schutz- und Führungskäfigs 11 vor den Transporteinheiten. Die angewinkelten Seitenbleche 11.1 sind ausgefahren und vorne geöffnet für das Umfassen der Transporteinheiten. Ferner
sind dargestellt das Führungsprofil 3 und die Führungsschienen 4.

Figur 3:

zeigt die "Überladebrücke mit Vorschub und ein- und ausschiebbarer Parallelführung" 2. Deren Steigungsteil und
Parallelführungsteil tragen Überfahrbleche 7, 8. Das
Überfahrblech 8 kann durch eine Verschiebehydraulik 14 um
± 100 mm senkrecht zur Fahrtrichtung verschoben werden.
Diese Führung erfolgt durch Führungsschlitze 13 in dem
Parallelführungsteil der Überladebrücke 2, in die zwei
Führungsbolzen des Überfahrbleches 8 hineingreifen, wodurch dessen exakte Parallelverschiebung bewirkt wird.

Das Überfahrblech 7 ist beweglich mit dem Überfahrblech 8
verbunden, so daß bei dessen Verschieben - das Überfahrblech 8 seitlich mitbewegend - die Steuerung sichernden
Übergänge zwischen dem Führungsprofil 3 und den Führungsschienen 4 erstere mit Einführungstrichtern 3.1, letztere
mit Einfahrkeilen 4.1 versehen - gebildet werden.

Auf den Überfahrbleche 7, 8 sind Führungsprofile 3, die
Führungsschienen 4 und die Absturzsicherungen 9 dargestellt, und auf dem Überfahrblech 8 zusätzlich der Einführ-/Justierrahmen 16 mit Einführblechen 17. Diese - beweglich montiert - werden innen an die Rungen des
Transportbehältnisses geklappt und dienen dann dem
Schutz- und Führungskäfig 11 als letzte Zentrierung vor
der Einfahrt.


Figur 4:


zeigt - vorzugsweise für die längsseitige Beladung - zwei
Hubgabeln, die zusätzlich zu den Tragrollen 12, die angetrieben und/oder arretierbar angeordnet sein können, zwei
Schubvorrichtungen 22, die - z.B. nach dem Zurückfahren
der Seitenbleche 11.1, des Schutz- und Führungskäfigs 11
- das seitliche Verschieben der Transporteinheiten auf
den Hubgabeln im Transportbehältnis fördern und im Zusammenhang mit dem möglichst gleichzeitigen Absenken der
Transporteinheiten bei deren Anstauen gegen bereits abgesetzte Transporteinheiten einen möglichen Reibungswiderstand minimieren sollen.

**Beispiel:**

Beladung eines angedockten LKW mit jeweils 2 längs gegeneinandergestellten Paletten:

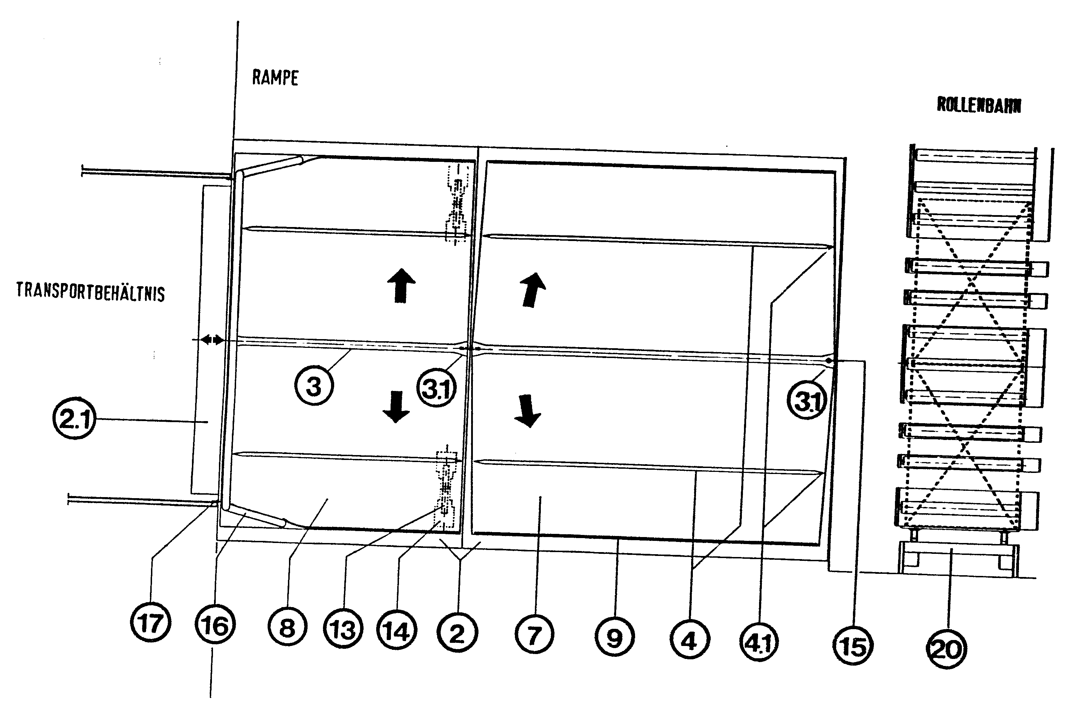

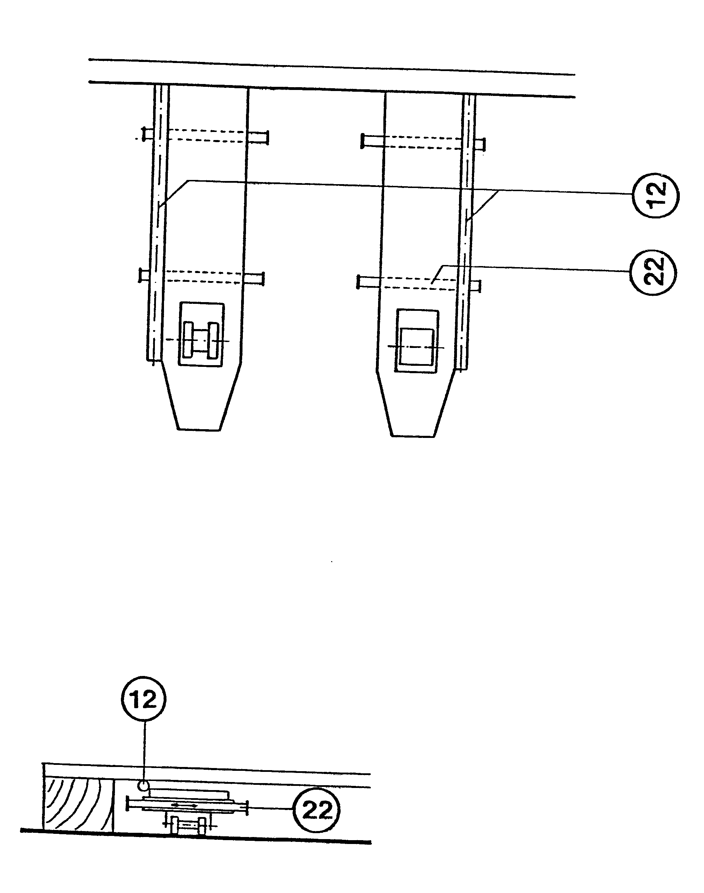

Der LKW (Figur 3) wurde möglichst mittig vor der Überladebrücke 2 mit Parallelführung und ein- und ausschiebbare Verlängerung angedockt. Das Überfahrblech 8 stellt
sich höhengleich mit dem LKW-Boden ein, wobei die Verlängerung 2.1 - den Freiraum zwischen Rampe und LKW
abdeckend - hydraulisch in den LKW eingeschoben wird und
sich auf dessen Boden auflegt.

Sofern der LKW nicht mittig angedockt wurde, wird das
Überfahrblech 8 hydraulisch mittig vor den LKW geschoben,
das Überfahrblech 7 - um den Fixpunkt 15 verschwenkend -
mitnehmend, so daß Führungsprofile 3 und Führungsleisten
4 an den beiden Schnittstellen Rampe / Überfahrbleche 7,
8 leichte Winkel bilden. Die jeweils gegenüberliegenden
Einführungstrichter 3.1 der Führungsprofile 3 sichern ein
zuverlässiges Überfahren von Rampe und Überladebrücke 2
durch die Lademaschine. Die beiden Einführbleche 17 werden in den LKW hineingeklappt und bilden einen Einfahrtrichter. Während des ganzen Ladevorganges bleiben die
Vorrichtungen auf dem Überfahrblech 8 unverändert.

Bei dem Start des Beladevorganges werden 2 Paletten durch
die Rollenbahn von einer Bereitstellungszone aus gegen
den Palettenanschlag 20 (Figur 2) gestaut. Der Schutz-
und Führungskäfig 11 der Lademaschine 1 wurde gleichzeitig in der Abrufzone durch die Justierbleche 19 mittig
vor den Paletten fixiert, so daß die Hubgabeln die Paletten unterfahren können und den Schutz- und Führungskäfig
11 mit vorne geöffneten Seitenblechen 11.1 die Paletten
umfessen kann. Geführt durch die Tandemrollen mit Führungsnut 6 und die Führungsrolle 5 gelangt die Lademaschine 1 auf das Überfahrblech 8 horizontal und vertikal einfahrgerecht vor dem LKW. Bei der Einfahrt wird der Schutz- und Führungskäfig 11 durch den Einführ-Justierrahmen 16 und die Einführbleche 17 optimal justiert. Im LKW übernehmen die federnd angebrachten Doppelleitrollen 10 die seitliche Führung an den Bordwänden. Sollten die angewinkelten Seitenbleche 11.1 des Schutz- und Führungskäfigs 11 vorne auf Unebenheiten der Bordwände treffen, werden die auf den Tragrollen 12 stehenden Paletten und durch diese der Schutz- und Führungskäfig 11 - in der Querschiene 18 geführt - durch die Querkräfte so verschoben, daß das standgesicherte Durchgleiten des Verbundes Schutz- und Führungskäfig 11/Paletten zwischen den Unebenheiten zu jeder Zeit gewährleistet ist.

Vor dem Absetzen der Paletten werden die angewinkelten Seitenbleche 11.1 durch die hydraulische Spreizvorrichtung 11.2 entspannt. Beim Zurückziehen der angewinkelten Seitenbleche durch die Zug-/Schubhydraulik 21 werden die vorderen Anwinklungen u.U. aufgebogen und bilden sich infolge der entsprechenden Eigenspannung nach dem Herausfahren wieder zurück.

Beim Herausfahren der Lademaschine 1 aus dem LKW übernehmen bei etwaigen Unebenheiten der Bordwände die hinteren Anwinklungen der Seitenbleche 11.1 die Ausrichtfunktion des Schutz- und Führungskäfigs 11. Die Lademaschine fährt in die Abrufzone zurück und der nächste Ladevorgang beginnt.

BEZUGSZEICHENLISTE

---

1.      Lademaschine
1.1.    Antriebsteil


2.      Überladebrücke (mit Parallelführung und ein- und
        ausschiebbarer Verlängerung)
2.1.    Verlängerung (ein- und ausschiebbar)


3.      Führungsprofil
3.1.    Einführtrichter


4.      Führungsschiene
4.1.    Einfahrkeil


5.      Führungsrolle
5.1.    Antriebsrad


6.      Tandemrolle (mit Führungsnut)


7.      Überfahrblech (auf Steigungsteil der Überladebrücke (2))


8.      Überfahrblech (auf Parallelführungsteil der Überladebrücke)


9.      Absturzsicherung


10.     Doppelleitrollen

0176756

11.      Schutz- und Führungskäfig
11.1.    Seitenbleche (angewickelt)
11.2.    Spreizvorrichtung (hydraulisch)
11.3.    Zug-/Schubrahmen

12.      Tragrollen

13.      Führungsschlitze

14.      Verschiebehydraulik

15.      Fixpunkt

16.      Einführ-/Justierrahmen

17.      Einführbleche

18.      Querschiene

19.      Justierblech

20.      Palettenanschlag

21.      Zug-/Schubhydraulik

22.      Schubvorrichtung

- 1 -

0176756

Patentansprüche:

1. Verladestation für das stirnseitige und längsseitige
automatische Be- und Entladen eines vor der Laderampe
angedockten Transportbehältnisses - wie Container,
Lastkraftwagen, Wechselaufbau oder Bahnwaggon - mit
gleichzeitig mehreren Transporteinheiten - wie Paletten, Boxen oder Schrumpfpakete - unter Verwendung
einer zwangsgesteuerten, vorzugsweise nach dem Hubprinzip arbeitenden, fahrerlosen Lademaschine  d a -
d u r c h   g e k e n n z e i c h n e t ,  daß die
Lademaschine (1) auf einer Rampe und auf einer höhenverstellbaren Überladebrücke (2) mit Parallelführung
und ein- und ausschiebbarer Verlängerung durch Führungsprofile (3) und Führungsschienen (4) geführt
wird, die auf - von einem Steigungsteil und einem
Parallelführungsteil getragenen - Überfahrblechen (7,
8) montiert sind und die seitlich so verschoben werden
können, daß die Lademaschine (1) auf dem Überfahrblech
(8) höhengleich und mittig vor dem Boden des Transportbehältnisses positioniert und in dieses eingefahren wird, wobei die Steuerung in an sich bekannter
Weise durch am Antriebsteil (1.1) beidseitig angebrachte Doppelleitrollen (10) erfolgt und das problemlose Durchfahren der Lademaschine (1) mit den Transporteinheiten gesichert wird sowohl durch einen die
Transporteinheiten umfassenden, durch von außen - z.B.
infolge Unebenheiten in den Bordwänden - einwirkende
Kräfte seitlich verschiebbaren Schutz- und Führungskäfig (11), als auch durch an den Hubgabeln angebrachte Tragrollen (12), die ein seitliches Verschieben der auf ihnen stehenden Transporteinheiten - zusammen mit dem sie umfassenden Schutz- und Führungskäfig (11) erleichtern, wobei - vorzugsweise bei der
längsseitigen Beladung - die Hubgabeln zusätzlich mit
Schubvorrichtunggen (22) ausgestattet sein können.

2. Verladestation nach Anspruch 1 d a d u r c h  g e - 
k e n n z e i c h n e t , daß die beidseitige Führung
der Lademaschine (1), im Transportbehältnis durch die
vorzugsweise federnd angebrachten Doppelleitrollen
(10) und die Führung außerhalb des Transportbehältnisses zum einen hinten durch eine unter dem Antriebsteil
(1.1) montierte, in den Führungsprofilen (3) laufende
Führungsrolle (5) erfolgt und zum anderen vorne -
unter den Hubgabeln - durch zwei Tandemrollen (6) mit
Führungsnut, die auf den Führungsschienen (4) rollen.


3. Verladestation nach den Ansprüchen 1 und 2 d a - 
d u r c h  g e k e n n z e i c h n e t , daß am
Antriebsteil (1.1) die Befestigungskonstruktion der
Führungsrollen (5) so nach hinten verlängert werden
kann, daß zwischen den Tandemrollen (6) mit Führungsnut und der Führungsrolle (5) ein größerer Abstand und
somit eine bessere Hebelwirkung der hinteren Bodenführung entsteht.


4. Verladestation nach den Ansprüchen 1 bis 3 d a - 
d u r c h  g e k e n n z e i c h n e t , daß das
Steigungsteil und das Parallelführungsteil der Überladebrücke (2) Überfahrbleche (7, 8) tragen, die durch
angeschweißte Bolzen oder Rollen in Führungsschlitzen
(13) in der Unterkonstruktion des Parallelführungsteiles seitlich mit einer Verschiebehydraulik (14) so
verschoben werden können, daß das Überfahrblech (8)
mittig - und höhengleich - vor dem Boden des Transportbehältnisses positioniert ist und das Führungsprofil (3) auf dem Überfahrblech (7) - nachgeführt
durch eine mittige flexible Verbindung - stets einen
steuerungssichernden Übergang zum Führungsprofil (3)
auf dem Überfahrblech (8) schafft.

0176756

5. Verladestation nach den Ansprüchen 1 bis 4 d a -
   d u r c h   g e k e n n z e i c h n e t , daß auf der
   Rampe und den Überfahrblechen (7, 8) die Führungsprofile (3) an den Enden mit Einführungstrichtern
   (3.1) versehen sind und die Führungsschienen (4) an
   den Enden verjüngt sind und somit Einfahrkeile (4.1)
   aufweisen.

6. Verladestation nach den Ansprüchen 1 bis 5 d a -
   d u r c h   g e k e n n z e i c h n e t , daß auf den
   Überfahrblechen (7, 8) an den Seiten Absturzsicherungen (9) und auf dem Überfahrblech (8) ein Einführ-
   /Justierrahmen (16) mit verschwenkbaren Einführblechen
   (17) montiert ist.

7. Verladestation nach den Ansprüchen 1 bis 6 d a -
   d u r c h   g e k e n n z e i c h n e t , daß die
   Lademaschine (1) mit dem Schutz- und Führungskäfig
   (11) für die Transporteinheiten dergestalt ausgerüstet
   ist, daß die angewinkelten Seitenbleche (11.1) mit
   Hilfe einer Zug-/Schubhydraulik (21) vor- und zurückfahren werden können und daß die angewickelten Seitenbleche vorne durch eine hydraulische Spreizvorrichtung
   (11.2) seitlich bewegt werden können.

8. Verladestation nach den Ansprüchen 1 bis 7 d a -
   d u r c h   g e k e n n z e i c h n e t , daß mehrere
   Hubgabeln mit deren Oberkanten geringfügig überragende
   Tragrollen (12) ausgestattet sind, auf denen die
   Transporteinheiten den durch äußere Kräfte verursachten seitlichen Bewegungen des Schutz- und Führungskäfigs (11) folgen können, wobei die Verschiebung des
Schutz- und Führungskäfigs (11) durch Querschienen
(18) ermöglicht wird.


9. Verladestation nach den Ansprüchen 1 bis 8 d a -
   d u r c h   g e k e n n z e i c h n e t , daß in der
   Abrufzone der Lademaschine (1) zwei Justierbleche (19)
   dergestalt montiert sind, daß sie den Schutz- und
   Führungskäfig (11) - sofern er beim Ladevorgang seitlich verschoben wurde - wieder so ausrichten, daß er
   mittig vor den gegen einen Palettenanschlag (20) auf
   einem Zufördersystem gestauten Transporteinheiten
   steht und nach dem Öffnen der angewinkelten Seitenbleche (11.1) die Transporteinheiten problemlos aufgenommen werden können.

2/4

FIGUR 3

| EINSCHLÄGIGE DOKUMENTE | | | EP 85110719.3 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
| A | DE - A1 - 3 115 936 (MIEBACH)<br>* Fig. 1-3,8,9 *<br>-- | 1,2,4,6 | B 65 G 67/02 |
| D,A | DE - A1 - 3 132 899 (MIEBACH)<br>* Fig. 1-3 *<br>-- | 1,2 | |
| D,A | DE - A1 -3 218 756 (MIEBACH)<br>* Fig. 1,3 *<br>---- | 1,2,4,6 | |

**RECHERCHIERTE SACHGEBIETE (Int. Cl.4)**

B 65 G

B 66 F

Der vorliegende Recherchenbericht wurde für alle Patentansprüche erstellt.

| Recherchenort | Abschlußdatum der Recherche | Prüfer |
|---|---|---|
| WIEN | 04-12-1985 | WIDHALM |